# EUROPEAN PATENT APPLICATION

(11) **EP 4 761 060 A1**
(43) Date of publication of application: **17.06.2026**
(21) Application number: 24851350.9
(22) Date of filing: 20.05.2024
(51) Int. Cl.: H02J 50/12, B60L 5/00, B60L 53/20, B60L 53/122, H02J 50/40, H02J 50/90

(54) **DURING-TRAVEL POWER FEEDING SYSTEM**

(30) Priority: 10.08.2023 JP 2023131217
(71) Applicant: Miraxia Edge Technology Corporation, Nagaokakyo City, Kyoto 617-8520 (JP)
(72) Inventor: TANAKA, Jun, Nagaokakyo City, Kyoto 617-8520 (JP); MIYA, Shigeo, Nagaokakyo City, Kyoto 617-8520 (JP); OKI, Motohiro, Nagaokakyo City, Kyoto 617-8520 (JP); OMORI, Hideki, Akashi-shi, Hyogo 673-0011 (JP)
(74) Representative: Appelt, Christian W.
(86) International application number: PCT/JP2024/018462
(87) International publication number: WO 2025/032916

(57) **Abstract**

An in-motion power supply system (10) includes: a power receiving unit (30) that is included in an automated transport vehicle (50) and includes a power receiving coil (L2), a power-receiving-side resonant capacitor (C2) that resonates with the power receiving coil (L2), and a rectifier circuit (32) as an AC-DC converter; and a power supply unit (20) that is connected to a direct-current power supply and includes a high-frequency inverter (22) including a power supply coil (L1) that is magnetically coupled to the power receiving coil (L2) when the automated transport vehicle (50) approaches, a switching element (SW) connected in series with the power supply coil (L1), and a power-supply-side resonant capacitor (C1) that resonates with the power supply coil (L1). The power supply unit (20) wirelessly supplies electric power to the power receiving unit (30) while the automated transport vehicle (50) is in motion.

## Description

### [Technical Field]

The present disclosure relates to an in-motion power supply system that supplies electric power to an automated transport vehicle in motion.

### [Background Art]

Conventionally, an in-motion power supply system that supplies electric power to an automated transport vehicle in motion has been proposed (for example, see Patent Literature (PTL) 1).

The in-motion power supply system according to PTL 1 provides a time period for pre-power-supply check before a power supply device begins main power supply to a power receiving device. In the pre-power-supply check, a power-supply-side controller fixes an effective value of an output voltage of an inverter circuit to a predetermined first voltage and a power-receiving-side controller fixes an input voltage of a DC-DC converter to a predetermined second voltage. In this state, the power-receiving-side controller checks supplied electric power supplied from the power supply device to the power receiving device, and, when the supplied electric power reaches or exceeds predetermined electric power, causes the power supply device to begin the main power supply. With this, a battery connected to the output of the DC-DC converter is appropriately charged.

### [Citation List]

### [Patent Literature]

[PTL 1] Japanese Patent No. 7243450

### [Summary of Invention]

### [Technical Problem]

However, in the technique disclosed by PTL 1, control is such that "when the supplied electric power reaches or exceeds a predetermined electric power, the power supply device [is caused] to begin the main power supply". Consequently, it is necessary to perform feedback control to detect the position of an automated transport vehicle and to control start/stop and the like of the power supply device in accordance with the detected position of the automated transport vehicle. In other words, the position of an automated transport vehicle needs to be detected, and the in-motion power supply system needs to start/stop in accordance with the position of the automated transport vehicle. This makes the control complex.

Furthermore, in the technique according to PTL 1, a plurality of switching elements forming a bridge are necessary for both the primary-side circuit and the secondary-side circuit of the DC-DC converter. This increases the size and cost of the in-motion power supply system.

In view of the above, the present disclosure has an objective to provide an in-motion power supply system that achieves reductions in size and cost and does not necessarily require feedback control.

### [Solution to Problem]

In order to achieve the above-described objective, an in-motion power supply system according to one aspect of the present disclosure includes: a power receiving unit that is included in an automated transport vehicle and includes a power receiving coil, a power-receiving-side resonant capacitor that resonates with the power receiving coil, and an AC-DC converter; and a power supply unit that is connected to a direct-current power supply and includes a high-frequency inverter, the high-frequency inverter including a power supply coil magnetically coupled to the power receiving coil when the automated transport vehicle approaches, a switching element connected in series with the power supply coil, and a power-supply-side resonant capacitor that resonates with the power supply coil. In the in-motion power supply system, the power supply unit wirelessly supplies electric power to the power receiving unit while the automated transport vehicle is in motion.

### [Advantageous Effects of Invention]

The present disclosure provides an in-motion power supply system that achieves reductions in size and cost and does not necessarily require feedback control.

### [Brief Description of Drawings]

[FIG. 1A]

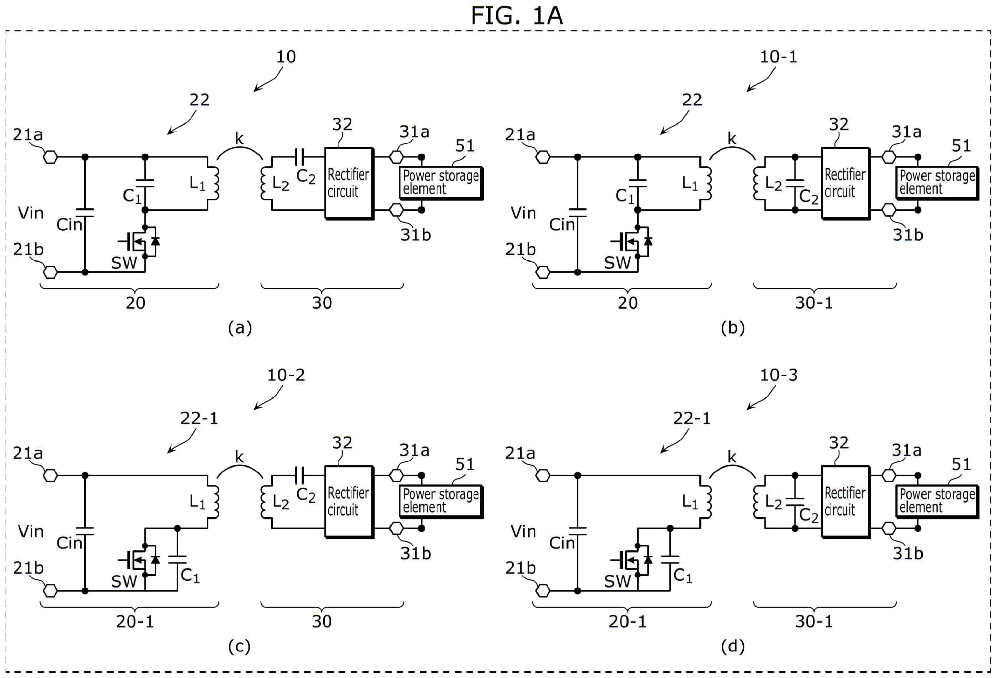

   FIG. 1A illustrates the circuit diagram of an in-motion power supply system according to an embodiment.
[FIG. 1B]

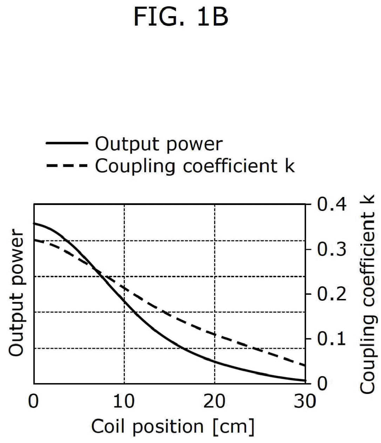

   FIG. 1B illustrates circuit characteristics of the in-motion power supply system according to the embodiment.
[FIG. 2]

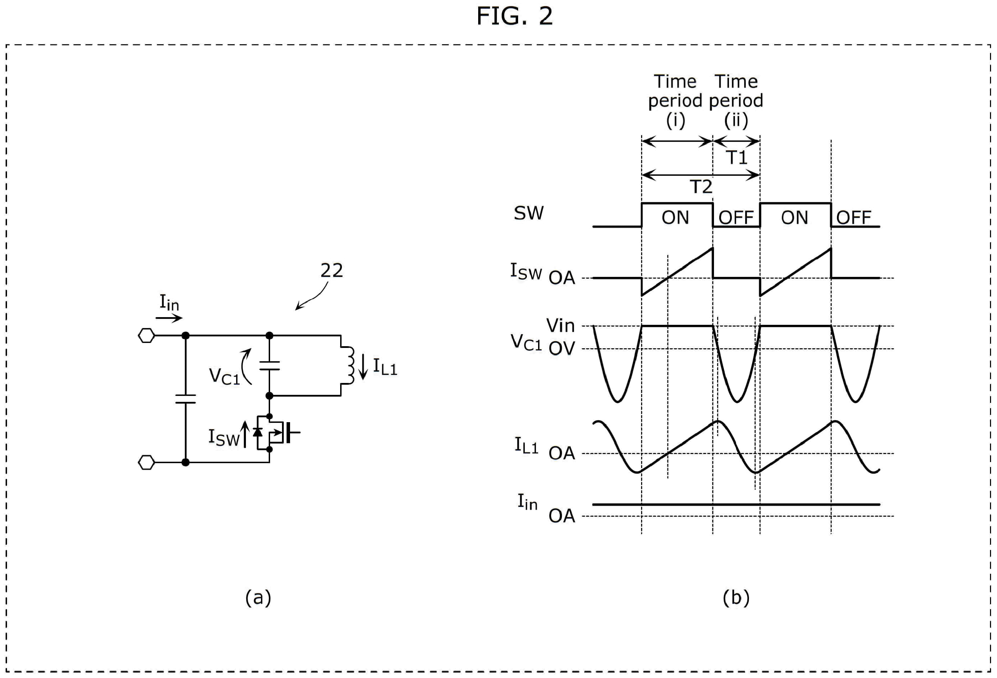

   FIG. 2 illustrates operation of the in-motion power supply system shown in FIG. 1A.
[FIG. 3]

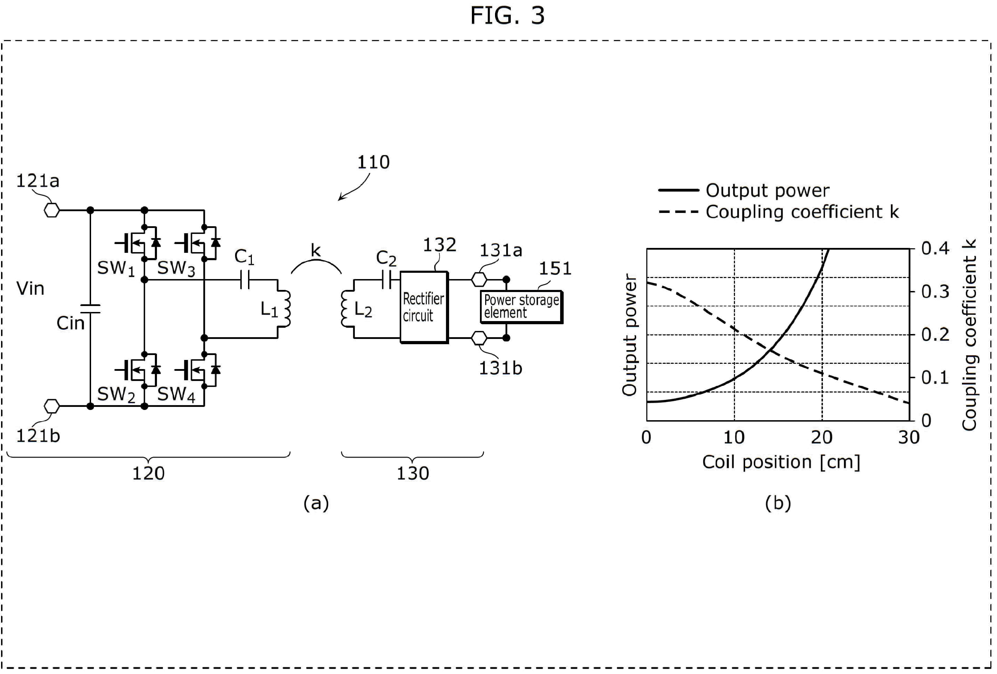

   FIG. 3 illustrates an in-motion power supply system according to a referential example which corresponds to a conventional technique.
[FIG. 4]

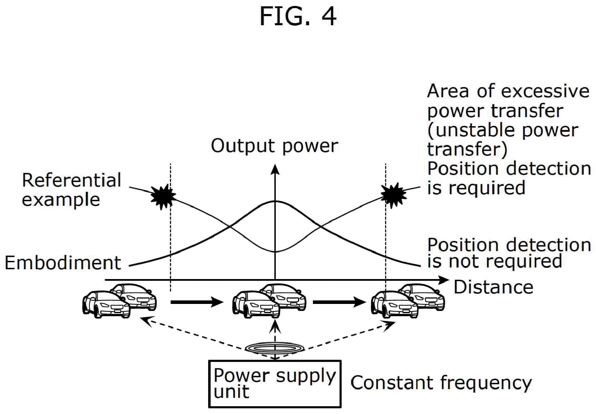

   FIG. 4 illustrates a comparison of the dependence of output voltage on distance between the in-motion power supply system according to the embodiment and the referential example.
[FIG. 5A]

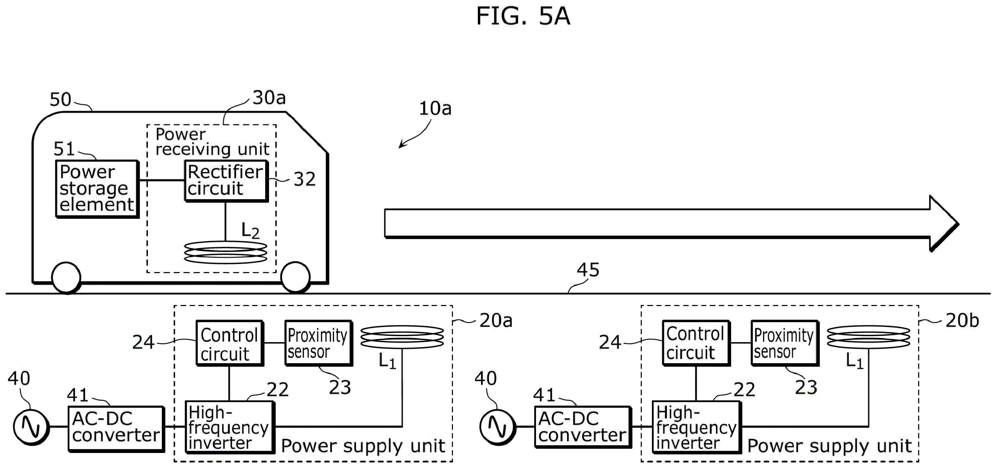

   FIG. 5A is a block diagram illustrating the configuration of an in-motion power supply system according to Variation 1 of the embodiment.
[FIG. 5B]

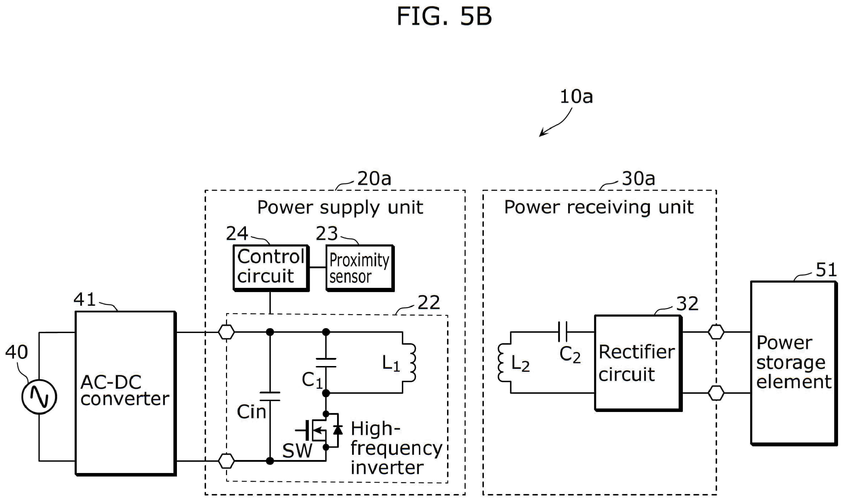

   FIG. 5B illustrates the circuit diagram of a pair of a power supply unit and a power receiving unit included in the in-motion power supply system shown in FIG. 5A.
[FIG. 6A]

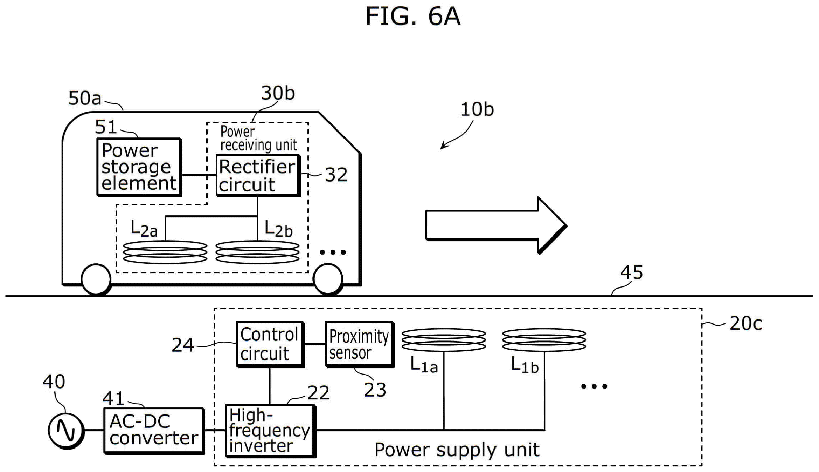

   FIG. 6A is a block diagram illustrating the configuration of an in-motion power supply system according to Variation 2 of the embodiment.
[FIG. 6B]

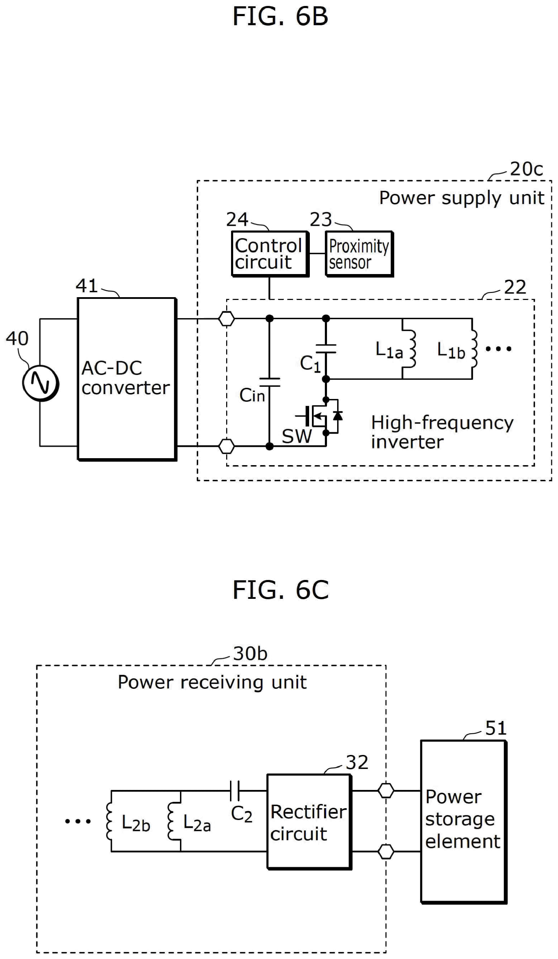

   FIG. 6B illustrates the circuit diagram of a power supply unit included in the in-motion power supply system shown in FIG. 6A.
[FIG. 6C]
   FIG. 6C illustrates the circuit diagram of a power receiving unit included in the in-motion power supply system shown in FIG. 6A.
[FIG. 7A]

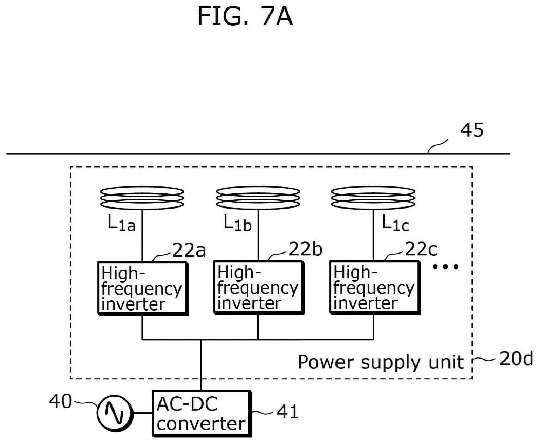

   FIG. 7A is a block diagram illustrating the configuration of a power supply unit included in an in-motion power supply system according to Variation 3 of the embodiment.
[FIG. 7B]

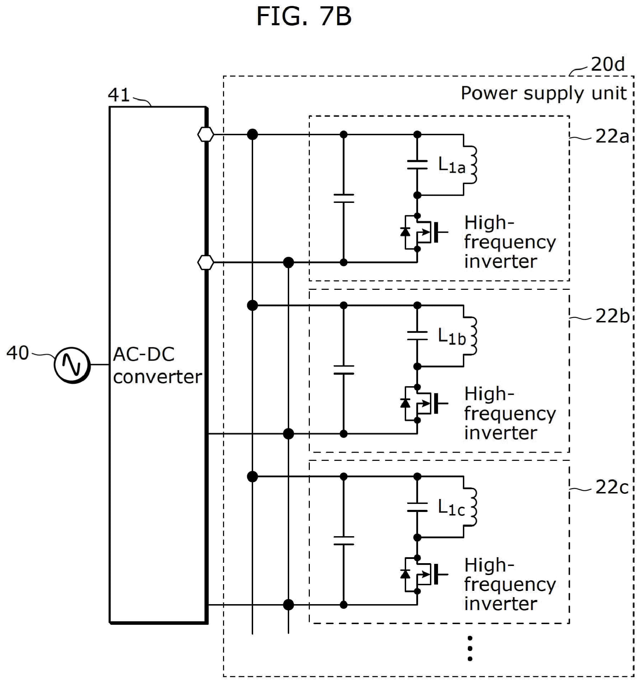

   FIG. 7B illustrates the circuit diagram of the power supply unit shown in FIG. 7A.
[FIG. 8A]

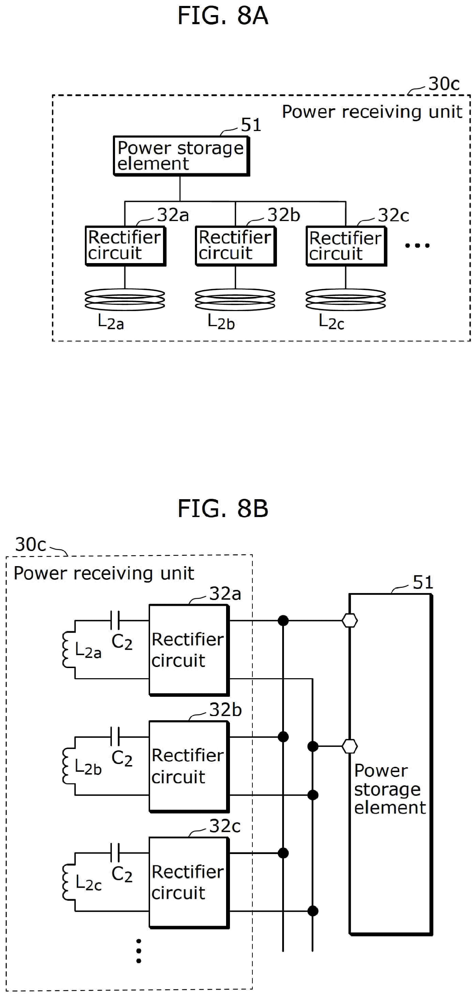

   FIG. 8A is a block diagram illustrating the configuration of a power receiving unit included in the in-motion power supply system according to Variation 3 of the embodiment.
[FIG. 8B]
   FIG. 8B illustrates the circuit diagram of the power receiving unit shown in FIG. 8A.

### [Description of Embodiments]

Hereinafter, embodiments according to the present disclosure will be described in detail with reference to the drawings. Note that the embodiments described below each show a specific example of the present disclosure. The numerical values, circuit components, the arrangement and connection of the circuit components, signal timings, control orders, etc. presented in the embodiments below are mere examples, and are not intended to limit the present disclosure. Moreover, the drawings do not necessarily provide strictly accurate illustrations. Throughout the drawings, the same reference sign is given to substantially the same configuration, and redundant description is omitted or simplified. The phrase "A and B are connected" means A and B are electrically connected. Moreover, the phrase not only means A and B are directly connected but also means A and B are indirectly connected with a circuit component interposed therebetween.

FIG. 1A illustrates the circuit diagram of in-motion power supply system 10 according to an embodiment. The diagram shows not only a representative in-motion power supply system 10 (part (a) of FIG. 1A) but also in-motion power supply systems 10-1 to 10-3 (part (b) to part (d) of FIG. 1A) according to variations. The diagram also shows power storage element 51 that is a peripheral element related to in-motion power supply systems 10 and 10-1 to 10-3.

As illustrated in part (a) of FIG. 1A, in-motion power supply system 10 is a noncontact (i.e., wireless) power supply system that supplies electric power to automated transport vehicles in motion. In-motion power supply system 10 includes power supply unit 20 that is configured to supply electric power and power receiving unit 30 that is included in an automated transport vehicle and is configured to receive the electric power supplied from power supply unit 20.

As illustrated in part (a) of FIG. 1A, power receiving unit 30 is included in an automated transport vehicle, and includes power receiving coil L2, power-receiving-side resonant capacitor C2 connected in series with power receiving coil L2, and rectifier circuit 32 that is one example of an AC-DC converter. Power receiving unit 30 converts alternating-current power supplied from power supply unit 20 into direct-current power using rectifier circuit 32 and outputs the direct-current power to power storage element 51 via output terminals 31a and 31b. Here, power receiving coil L2 and power-receiving-side resonant capacitor C2 form a series resonant circuit. Note that, like power receiving unit 30-1 shown in part (b) and part (d) of FIG. 1A, power receiving coil L2 and power-receiving-side resonant capacitor C2 may form a parallel resonant circuit in which power receiving coil L2 and power-receiving-side resonant capacitor C2 are connected in parallel. In this case, compared to the series resonant circuit configuration, the parallel resonant circuit configuration is more suitable for a high-voltage, low-current output.

As illustrated in part (a) of FIG. 1A, power supply unit 20 is connected to a direct-current power supply (not illustrated) via input terminals 21a and 21b, and includes high-frequency inverter 22 including power supply coil L1 magnetically coupled to power receiving coil L2 when an automated transport vehicle approaches, switching element SW such as a metal oxide semiconductor field-effect transistor (MOSFET) connected in series with power supply coil L1, and power-supply-side resonant capacitor C1 connected in parallel with power supply coil L1. Power supply unit 20 wirelessly supplies electric power to power receiving unit 30 while an automated transport vehicle is in motion.

Here, as illustrated in part (a) of FIG. 1A, power supply coil L1 and power-supply-side resonant capacitor C1 form a parallel resonant circuit. Moreover, unlike conventional inverters that include a plurality of switching elements forming a bridge, high-frequency inverter 22 is a single-ended circuit that performs DC-to-AC conversion using only a single switching element SW. Note that, like power supply unit 20-1 shown in part (c) and part (d) of FIG. 1A, power supply coil L1 and power-supply-side resonant capacitor C1 may form a parallel resonant circuit by connecting power-supply-side resonant capacitor C1 in parallel with switching element SW.

Note that smoothing capacitor Cin is connected between input terminals 21a and 21b in the present embodiment, but smoothing capacitor Cin is not necessarily required.

FIG. 1B illustrates circuit characteristics of in-motion power supply system 10 according to the embodiment. In the diagram, circuit characteristics (i.e., dependence on distance) of in-motion power supply system 10 are shown, where the horizontal axis indicates the distance (Coil position) between power supply coil L1 and power receiving coil L2, the left-side vertical axis indicates the output power (Output power) of in-motion power supply system 10, and the right-side vertical axis indicates the coupling coefficient (Coupling coefficient k) of power supply coil L1 and power receiving coil L2. Note that the switching frequency of switching element SW is kept constant regardless of the distance between power supply coil L1 and power receiving coil L2. In other words, the frequency of alternating-current power supplied by power supply unit 20 is constant.

As shown by the output power characteristic in FIG. 1B, in in-motion power supply system 10 according to the present embodiment, the output power is maximized when power supply coil L1 and power receiving coil L2 are closest (i.e., when the distance indicated by the horizontal axis is zero), and decreases as the distance between power supply coil L1 and power receiving coil L2 increases. With this characteristic, even though the switching frequency of switching element SW is kept constant, the output power is maximized when an automated transport vehicle is closest to power supply unit 20 and decreases as the automated transport vehicle moves away from power supply unit 20, yielding an efficient output power characteristic.

FIG. 2 illustrates operation of in-motion power supply system 10 shown in FIG. 1A. To be more specific, part (a) of FIG. 2 shows symbols for the voltage and current in high-frequency inverter 22 shown in part (a) of FIG. 1A, and part (b) of FIG. 2 shows the timings of the voltage, current, etc., shown in part (a) of FIG. 2. Specifically, in part (b) of FIG. 2, "SW" indicates the switching state of switching element SW, "I_{SW}" indicates a current that flows through switching element SW, "V_{C1}" indicates a voltage across power-supply-side resonant capacitor C1, "I_{L1}" indicates a current that flows through power supply coil L1, and "Iᵢₙ" indicates a current input from the direct-current power supply (not illustrated) into high-frequency inverter 22.

As shown by the switching state ("SW") of switching element SW, at present, switching element SW repeats switching in which switching element SW turns ON during time period (i) and turns OFF during time period (ii). Here, time period T1 corresponding to time period (ii) is a period associated with the resonance frequency of the parallel resonant circuit including power supply coil L1 and power-supply-side resonant capacitor C1. Time period T2 corresponding to a combination of time period (i) and time period (ii) is a period associated with the resonance frequency of the series resonant circuit including power receiving coil L2 and power-receiving-side resonant capacitor C2.

As illustrated in FIG. 2, in in-motion power supply system 10 according to the present embodiment, power supply unit 20 converts the input direct-current power into alternating-current power by switching performed by switching element SW, and wirelessly supplies electric power to power receiving unit 30 by applying the alternating-current power to the parallel resonant circuit including power supply coil L1 and power-supply-side resonant capacitor C1. Power receiving unit 30 then receives the alternating-current power wirelessly supplied from power supply unit 20 using the series resonant circuit including power receiving coil L2 and power-receiving-side resonant capacitor C2, converts the alternating-current power into direct-current power using rectifier circuit 32, and supplies the direct-current power to power storage element 51.

FIG. 3 illustrates in-motion power supply system 110 according to a referential example which corresponds to a conventional technique. To be more specific, part (a) of FIG. 3 illustrates the circuit diagram of in-motion power supply system 110 according to the referential example and part (b) of FIG. 3 illustrates circuit characteristics of in-motion power supply system 110 according to the referential example. Part (a) and part (b) of FIG. 3 correspond to FIG. 1A and FIG. 1B according to the embodiment, respectively.

As illustrated in part (a) of FIG. 3, in-motion power supply system 110 according to the referential example includes power supply unit 120 and power receiving unit 130. Power receiving unit 130 includes power receiving coil L2, power-receiving-side resonant capacitor C2 connected in series with power receiving coil L2, and rectifier circuit 132 that is one example of an AC-DC converter. Power receiving unit 130 converts alternating-current power received from power supply unit 120 into direct-current power using rectifier circuit 132, and outputs the direct-current power to power storage element 151 via output terminals 131a and 131b. Here, power receiving coil L2 and power-receiving-side resonant capacitor C2 form a series resonant circuit.

Power supply unit 120 is an inverter that converts direct-current input voltage Vin input via input terminals 121a and 121b into alternating current. Power supply unit 120 includes four switching elements SW1 to SW4 that form a full bridge and a series resonant circuit including power supply coil L1 driven by the four switching elements SW1 to SW4 and power-supply-side resonant capacitor C1.

As shown by the dependence on distance in part (b) of FIG. 3, unlike in-motion power supply system 10 according to the embodiment, the output power increases as the distance between power supply coil L1 and power receiving coil L2 increases in in-motion power supply system 110 according to the referential example. Note that the switching frequency of switching elements SW1 to SW4 are kept constant (i.e., the resonance frequency of the series resonant circuit including power supply coil L1 and power-supply-side resonant capacitor C1) regardless of the distance between power supply coil L1 and power receiving coil L2. In other words, the frequency of alternating-current power supplied by power supply unit 120 is constant.

FIG. 4 illustrates a comparison of the dependence of output voltage (Output power) on distance between the in-motion power supply system according to the embodiment and the in-motion power supply system according to the referential example. Specifically, FIG. 4 illustrates the dependence of output voltage on distance (the curve of the "embodiment") of in-motion power supply system 10 according to the embodiment shown in FIG. 1B, together with the dependence of output voltage on distance (the curve of the "referential example") of in-motion power supply system 110 according to the referential example shown in part (b) of FIG. 3. Here, as indicated in the lower part of the present diagram, the frequency of alternating-current power supplied by a power supply unit is constant.

As shown by the curve of the "embodiment" in FIG. 4, in in-motion power supply system 10 according to the embodiment, the output power is maximized when an automated transport vehicle is closest to the power supply unit and decreases as the automated transport vehicle moves away from the power supply unit. Meanwhile, as shown by the curve of the "referential example" in FIG. 4, in in-motion power supply system 110 according to the referential example, the output power is, on the contrary, minimized when an automated transport vehicle is closest to the power supply unit and increases as the automated transport vehicle moves away from the power supply unit.

As can be seen, in FIG. 4, by the comparison of output power in the area in which automated transport vehicles are farther away from the power supply unit, when the inverters of the power supply units are driven at a constant frequency, the output power is high in in-motion power supply system 110 according to the referential example which results in excessive power transfer, whereas the output power is automatically reduced in in-motion power supply system 10 according to the embodiment. As can be seen from the above, in-motion power supply system 110 according to the referential example requires feedback control to detect the position of an automated transport vehicle and to control start/stop and the like of the power supply device in accordance with the detected position of the automated transport vehicle. On the contrary, in-motion power supply system 10 according to the embodiment requires no such feedback control.

FIG. 5A is a block diagram illustrating the configuration of in-motion power supply system 10a according to Variation 1 of the embodiment. Note that the present diagram also illustrates peripheral elements (alternating-current power supply 40, AC-DC converter 41, automated transport vehicle 50, and power storage element 51) related to in-motion power supply system 10a.

As illustrated in FIG. 5A, in-motion power supply system 10a according to the present variation includes power supply units 20a and 20b provided at places on floor/rail 45 that forms a path along which automated transport vehicle 50 travels and power receiving unit 30a provided in automated transport vehicle 50.

Note that power supply coil L1 and high-frequency inverter 22 are separately illustrated in both power supply units 20a and 20b for the convenience of description - power supply coil L1 is an element included in high-frequency inverter 22. Moreover, power supply units 20a and 20b include the same elements. Hereinafter, power supply unit 20a will be described as a representative of power supply units 20a and 20b.

FIG. 5B illustrates the circuit diagram of a pair of power supply unit 20a and power receiving unit 30a included in in-motion power supply system 10a shown in FIG. 5A. The present diagram also illustrates peripheral elements (alternating-current power supply 40, AC-DC converter 41, and power storage element 51) related to in-motion power supply system 10a. Alternating-current power supply 40 and AC-DC converter 41 form the direct-current power supply that supplies a direct-current voltage to high-frequency inverter 22.

As illustrated in FIG. 5A and FIG. 5B, in in-motion power supply system 10a according to the present variation, power supply unit 20a uses, as an input, a direct-current voltage supplied from the direct-current power supply including alternating-current power supply 40 and AC-DC converter 41 that converts an alternating-current voltage into direct current and wirelessly supplies direct-current power toward power receiving unit 30a. In addition to high-frequency inverter 22 that includes power supply coil L1, switching element SW, and power-supply-side resonant capacitor C1 described in the embodiment, power supply unit 20a includes, in the present variation, proximity sensor 23 and control circuit 24. Note that a direct-current voltage input into power supply unit 20a need not be a voltage converted from an alternating-current voltage.

Proximity sensor 23 is a sensor that detects the approach of automated transport vehicle 50 to power supply coil L1, and is, for example, a camera that captures images of automated transport vehicle 50, a distance measuring device that measures the distance to automated transport vehicle 50, an antenna that detects the intensity of electromagnetic waves emitted by automated transport vehicle 50, a receiver that receives the current position of automated transport vehicle 50, or the like. Note that proximity sensor 23 is not an element necessarily required for in-motion power supply system 10a. Accordingly, proximity sensor 23 need not be provided in in-motion power supply system 10a.

When proximity sensor 23 is provided, control circuit 24 controls, depending on the detection output by proximity sensor 23, high-frequency inverter 22 (to be more specific, switching element SW) to wirelessly supply electric power from power supply unit 20a to power receiving unit 30a while automated transport vehicle 50 is in motion. Control circuit 24 includes, for example, memory that stores programs and the like, a processor that executes the programs, a driving circuit that drives switching element SW, etc. Control circuit 24 controls switching element SW to switch at an approximately constant frequency only while automated transport vehicle 50 is detected to be within a fixed distance range by proximity sensor 23. Alternatively, when automated transport vehicle 50 is detected not to be within the fixed distance range by proximity sensor 23, control circuit 24 stops switching performed by switching element SW. Here, the expression "approximately constant frequency" means a substantially constant frequency. Stated differently, the expression "approximately constant frequency" means a frequency within a range to the extent that the dependence of output voltage on distance in in-motion power supply system 10 according to the embodiment shown in FIG. 4 is exhibited. For example, the range that allows a variation of 30%, optionally 20%, more optionally 10%, and even more optionally 5% relative to a given frequency.

Note that when in-motion power supply system 10a is not provided with proximity sensor 23, control circuit 24 controls switching element SW to switch at an approximately constant frequency regardless of the position of automated transport vehicle 50.

Here, the direct-current power supply (i.e., the direct-current power supply including alternating-current power supply 40 and AC-DC converter 41) that supplies a direct-current voltage to power supply unit 20a may be a power supply that supplies ripple power, i.e., power with ripples. In other words, the direct-current power supply may be the power supply that supplies ripple power and includes a rectifier stack that rectifies an alternating-current voltage supplied from alternating-current power supply 40 and a filter capacitor having a capacitance sufficient to cause an output voltage output from the direct-current power supply to be a ripple voltage. In this case, control circuit 24 drives switching element SW using a driving signal whose frequency is modulated to suppress current harmonics generated in high-frequency inverter 22 that is driven by a ripple power supplied from the direct-current power supply. For example, control circuit 24 suppresses current harmonics generated in high-frequency inverter 22 by causing switching element SW to switch at (i) a frequency that reduces the instantaneous power during a time period in which the instantaneous voltage of a ripple voltage input to high-frequency inverter 22 is low and (ii) a frequency that increases the instantaneous power during a time period in which the instantaneous voltage of a ripple voltage input to high-frequency inverter 22 is high.

Automated transport vehicle 50 is an automated guided vehicle (AGV) that is a mobile robot that transports and carries goods along a predetermined transport path without humans in attendance, an autonomous mobile robot (AMR) that autonomously determines a traveling path and transports and carries goods, or the like. Automated transport vehicle 50 includes power receiving unit 30a and power storage element 51 that is charged by direct-current power output from power receiving unit 30a.

In addition to the series resonant circuit including power receiving coil L2 and power-receiving-side resonant capacitor C2 described in the embodiment, power receiving unit 30a includes, in the present variation, rectifier circuit 32 that is one example of an AC-DC converter which rectifies, to a direct-current voltage, an alternating-current voltage output from the series resonant circuit. Rectifier circuit 32 is, for example, a diode bridge or the like, and outputs, to power storage element 51, the direct-current voltage obtained by rectification. Note that rectifier circuit 32 may be a synchronous rectification circuit including a bridge formed by switching elements such as a MOSFET.

When proximity sensor 23 is provided, in-motion power supply system 10a according to the present variation as described above can control start/stop and the like of power supply devices 20a and 20b using proximity sensor 23. Accordingly, compared to the above-described embodiment, in-motion power supply system 10a according to the present variation is capable of even more efficiently supplying power to automated transport vehicle 50. Moreover, since power receiving unit 30a includes rectifier circuit 32, power receiving unit 30a is capable of charging power storage element 51.

Note that while power receiving unit 30a includes the series resonant circuit in in-motion power supply system 10a according to the present variation, power receiving unit 30a may alternatively include a parallel resonant circuit. Power supply coil L1 is placed on floor/rail 45, but may be placed on a wall surface, ceiling surface, or the like. Power supply coil L1 may be placed anywhere as long as power supply coil L1 can be magnetically coupled to power receiving coil L2.

FIG. 6A is a block diagram illustrating the configuration of in-motion power supply system 10b according to Variation 2 of the embodiment. As illustrated in the present diagram, in-motion power supply system 10b according to the present variation includes power supply unit 20c and power receiving unit 30b provided in automated transport vehicle 50a. Although the present diagram shows a single power supply unit 20c, a plurality of other power supply units each including the same elements as power supply unit 20c may be provided on floor/rail 45 in the same manner as in-motion power supply system 10a according to Variation 1.

FIG. 6B illustrates the circuit diagram of power supply unit 20c included in in-motion power supply system 10b shown in FIG. 6A. FIG. 6C illustrates the circuit diagram of power receiving unit 30b included in in-motion power supply system 10b shown in FIG. 6A. In FIG. 6B and FIG. 6C, one or more power supply coils, L1a, L1b, and the like, are provided in power supply unit 20c and one or more power receiving coils, L2a, L2b, and the like, are provided in power receiving unit 30b. Furthermore, while power receiving unit 30b includes the series resonant circuit, power receiving unit 30b may alternatively include a parallel resonant circuit.

In-motion power supply system 10b according to the present variation basically includes the same elements as in-motion power supply system 10a according to Variation 1 shown in FIG. 5A and FIG. 5B. However, the present variation is different from Variation 1 on the following points: (i) power supply unit 20c includes a plurality of power supply coils L1a and L1b connected in parallel and (ii) power receiving unit 30b includes a plurality of power receiving coils L2a and L2b connected in parallel. More precisely, in power supply unit 20c, a single high-frequency inverter 22 includes power supply coils L1a and L1b connected in parallel, and in power receiving unit 30b, power receiving coils L2a and L2b connected in parallel are connected to a single rectifier circuit 32.

According to the above-described in-motion power supply system 10b according to the present variation, a single power supply unit 20c is provided with the plurality of power supply coils L1a and L1b. This increases, as compared to Variation 1, the time during which the power supply coil group and the power receiving coil group are coupled together during a single pass of automated transport vehicle 50. Accordingly, the total amount of electric power to be transmitted can be increased.

FIG. 7A is a block diagram illustrating the configuration of power supply unit 20d included in the in-motion power supply system according to Variation 3 of the embodiment. FIG. 7B illustrates the circuit diagram of power supply unit 20d shown in FIG. 7A.

As illustrated in FIG. 7A and FIG. 7B, power supply unit 20d according to the present variation includes a plurality of high-frequency inverters 22a to 22c. Moreover, in the present variation, each of the plurality of high-frequency inverters 22a to 22c includes a single, corresponding power supply coil, L1a to L1c. Note that a single high-frequency inverter may include two or more power supply coils.

Note that in FIG. 7A and FIG. 7B, power supply unit 20d may include proximity sensor 23 and control circuit 24 in the same manner as the above-described Variations 1 and 2 to perform the same control as described above in Variation 1. In the present variation, control circuit 24 concurrently performs the same drive control on the three high-frequency inverters 22a to 22c.

FIG. 8A is a block diagram illustrating the configuration of power receiving unit 30c shown in FIG. 7A, namely power receiving unit 30c of the in-motion power supply system according to Variation 3 of the embodiment. FIG. 8B illustrates the circuit diagram of power receiving unit 30c shown in FIG. 8A.

As illustrated in FIG. 8A and FIG. 8B, power receiving unit 30c according to the present variation includes a plurality of series resonant circuits including respective power receiving coils L2a to L2c, and a plurality of rectifier circuits 32a to 32c provided corresponding to each of the plurality of series resonant circuits. The outputs of the plurality of rectifier circuits 32a to 32c are connected to a single power storage element 51 included in automated transport vehicle 50. Note that although power receiving unit 30c includes the series resonant circuits, power receiving unit 30c may alternatively include parallel resonant circuits.

As illustrated in FIG. 7A, FIG. 7B, FIG. 8A, and FIG. 8B, power supply unit 20d and power receiving unit 30c according to the present variation are (i) the same as the above-described Variation 2 in that power supply unit 20d and power receiving unit 30c include the plurality of power supply coils L1a to L1c and the plurality of power receiving coils L2a to L2c, respectively and (ii) different from the above-described Variation 2 in that power supply unit 20d and power receiving unit 30c include the plurality of high-frequency inverters 22a to 22c and the plurality of rectifier circuits 32a to 32c, respectively.

As compared to Variation 1, the in-motion power supply system according to the present variation having the above-described features can increase, by employing the above-described configuration including a plurality of coils, the time during which the power supply coil group and the power receiving coil group are coupled together during a single pass of automated transport vehicle 50. Accordingly, the total amount of electric power to be transmitted can be increased. As compared to Variation 2, parallelizing the high-frequency inverters allows the power supply unit to stabilize electric power transmitted by each coil.

As has been described above, in-motion power supply system 10 according to the embodiment includes: power receiving unit 30 that is included in automated transport vehicle 50 and includes power receiving coil L2, power-receiving-side resonant capacitor C2 that resonates with power receiving coil L2, and rectifier circuit 32 as an AC-DC converter; and power supply unit 20 that is connected to a direct-current power supply and includes high-frequency inverter 22 including power supply coil L1 magnetically coupled to power receiving coil L2 when automated transport vehicle 50 approaches, switching element SW connected in series with power supply coil L1, and power-supply-side resonant capacitor C1 that resonates with power supply coil L1. In in-motion power supply system 10, power supply unit 20 wirelessly supplies electric power to power receiving unit 30 while automated transport vehicle 50 is in motion.

As a result, power supply unit 20 provided with a single switching element SW can obtain a characteristic in which the output power is maximized when automated transport vehicle 50 is closest to power supply unit 20 and decreases as automated transport vehicle 50 moves away from power supply unit 20. Therefore, in-motion power supply system 10 that achieves reductions in size and cost and does not necessarily require feedback control is implemented.

Here, like Variation 1, power supply unit 20a may further include: proximity sensor 23 that detects approach of automated transport vehicle 50 to power supply coil L1; and control circuit 24 that controls, depending on a detection output by proximity sensor 23, switching element SW to wirelessly supply electric power from power supply unit 20 to power receiving unit 30 while automated transport vehicle 50 is in motion. As a result, by starting/stopping power supply in accordance with the position of automated transport vehicle 50, electric power can be more efficiently supplied to automated transport vehicle 50.

Moreover, like Variation 2 and Variation 3, power supply unit 20c, etc., may include a plurality of power supply coils L1a to L1c. Similarly, like Variation 2 and Variation 3, power receiving unit 30b, etc., may include a plurality of power receiving coils L2a to L2c. This increases the time during which the power supply coil group and the power receiving coil group are coupled together during a single pass of automated transport vehicle 50. Accordingly, the amount of electric power that can be supplied to automated transport vehicle 50 passing near power supply unit 20c, etc., can be increased.

In addition, as described in Variation 1, the direct-current power supply may be a power supply that supplies ripple power and includes a rectifier stack that rectifies an alternating-current voltage from alternating-current power supply 40 and a filter capacitor having a capacitance sufficient to cause an output voltage to be a ripple voltage. In this case, control circuit 24 may drive switching element SW of high-frequency inverter 22, which is driven by ripple power supplied from the direct-current power supply, using a driving signal whose frequency is modulated to suppress current harmonics generated by an alternating-current power supply. As a result, unwanted electromagnetic radiation can be suppressed without requiring a large-capacitance capacitor to smooth the direct-current voltage output from the direct-current power supply.

Furthermore, as described in Variation 1, control circuit 24 may drive switching element SW at an approximately constant frequency while automated transport vehicle 50 passes a position close to power supply coil L1. As a result, electric power is supplied to automated transport vehicle 50 only during the time period when the power supply is necessary. This enables more efficient power supply.

Moreover, as described in Variation 3, power receiving unit 30c includes a plurality of rectifier circuits 32a to 32c. The plurality of power receiving coils L2a to L2c are connected to the plurality of rectifier circuits 32a to 32c. The outputs of the plurality of rectifier circuits 32a to 32c are connected to a single power storage element 51 included in automated transport vehicle 50. As a result, the time during which the power supply coil group and the power receiving coil group are coupled together during a single pass of automated transport vehicle 50 is increased. Accordingly, the total amount of electric power to be transmitted can be increased.

In addition, as described in Variation 3, the plurality of power supply coils L1a and L1b are connected to a plurality of high-frequency inverters 22a and 22b. Control circuit 24 drives a plurality of switching elements SW included in the plurality of high-frequency inverters 22a and 22b at an approximately constant frequency while automated transport vehicle 50 passes a position close to the plurality of power supply coils L1a and L1b. As a result, by parallelizing the high-frequency inverters, electric power transmitted by each coil can be stabilized.

Hereinbefore, the in-motion power supply system according to the present disclosure has been described; however, the present disclosure is not limited to the embodiment and variations. The scope of the present disclosure encompasses embodiments as a result of making, to the present embodiments and variations, various modifications that may be conceived by those skilled in the art, and different embodiments achieved by combining some elements in the embodiments and variations, as long as the resultant embodiments do not depart from the spirit of the present disclosure.

For example, in the above-described Variations 1 to 3, proximity sensor 23 is not necessarily provided in the in-motion power supply system. In this case, control circuit 24 may control switching element SW to switch at an approximately constant frequency regardless of the position of automated transport vehicle 50.

### [Industrial Applicability]

The present disclosure can be used as an in-motion power supply system for supplying electric power to automated transport vehicles in motion - for example, as a system for supplying power to AGVs, AMRs, and the like.

### [Reference Signs List]

10, 10a, 10b, 10-1, 10-2 in-motion power supply system
20, 20a to 20d, 20-1 power supply unit
21a, 21b input terminal
22, 22a to 22c, 22-1 high-frequency inverter
23 proximity sensor
24 control circuit
Cin smoothing capacitor
L1, L1a to L1c power supply coil
C1 power-supply-side resonant capacitor
SW switching element
30, 30a to 30c, 30-1 power receiving unit
31a, 31b output terminal
32, 32a to 32c rectifier circuit
L2, L2a to L2c power receiving coil
C2 power-receiving-side resonant capacitor
Vin input voltage
40 alternating-current power supply
41 AC-DC converter
45 floor/rail
50, 50a automated transport vehicle
51 power storage element

## Claims

1. An in-motion power supply system comprising:
a power receiving unit that is included in an automated transport vehicle and includes a power receiving coil, a power-receiving-side resonant capacitor that resonates with the power receiving coil, and an AC-DC converter; and
a power supply unit that is connected to a direct-current power supply and includes a high-frequency inverter, the high-frequency inverter including a power supply coil magnetically coupled to the power receiving coil when the automated transport vehicle approaches, a switching element connected in series with the power supply coil, and a power-supply-side resonant capacitor that resonates with the power supply coil, wherein
the power supply unit wirelessly supplies electric power to the power receiving unit while the automated transport vehicle is in motion.

2. The in-motion power supply system according to claim 1, wherein
the power supply unit includes:
a proximity sensor that detects approach of the automated transport vehicle to the power supply coil; and
a control circuit that controls, depending on a detection output by the proximity sensor, the switching element to wirelessly supply electric power from the power supply unit to the power receiving unit while the automated transport vehicle is in motion.

3. The in-motion power supply system according to claim 2, wherein
the power supply unit includes a plurality of power supply coils each of which is the power supply coil.

4. The in-motion power supply system according to claim 2, wherein
the power receiving unit includes a plurality of power receiving coils each of which is the power receiving coil.

5. The in-motion power supply system according to claim 2, wherein
the direct-current power supply is a power supply that supplies ripple power and includes a rectifier stack that rectifies an alternating-current voltage from an alternating-current power supply and a filter capacitor having a capacitance sufficient to cause an output voltage to be a ripple voltage.

6. The in-motion power supply system according to claim 2, wherein
the control circuit drives the switching element at an approximately constant frequency while the automated transport vehicle passes a position close to the power supply coil.

7. The in-motion power supply system according to claim 4, wherein
the power receiving unit includes a plurality of AC-DC converters each of which is the AC-DC converter,
the plurality of power receiving coils are connected to the plurality of AC-DC converters, and
outputs of the plurality of AC-DC converters are connected to a power storage element included in the automated transport vehicle.

8. The in-motion power supply system according to claim 3, wherein
the plurality of power supply coils are connected to a plurality of high-frequency inverters each of which is the high-frequency inverter, and
the control circuit drives the switching element included in each of the plurality of high-frequency inverters at an approximately constant frequency while the automated transport vehicle passes a position close to the plurality of power supply coils.

9. The in-motion power supply system according to claim 5, wherein
the control circuit drives the switching element included in the high-frequency inverter driven by the ripple power, using a driving signal whose frequency is modulated to suppress a current harmonic generated by the alternating-current power supply.
